# FASCICULE DE BREVET EUROPEEN

(11) **EP 1 528 605 B1**
(45) Date de publication et mention de la délivrance du brevet: **09.12.2009**
(21) Numéro de dépôt: 04300740.0
(22) Date de dépôt: 28.10.2004
(51) Int. Cl.: H01L 41/04, F02D 41/20

(54) **Dispositif de commande d'actionneurs piézo-électriques ultrasonores**
Steuervorrichtung für piezoelektrische Ultraschallaktoren
Control unit for ultrasonic piezoelectric actuators

(30) Priorité: 31.10.2003 FR 0312804
(43) Date de publication de la demande: 04.05.2005
(73) Titulaire: RENAULT S.A.S., 92100 Boulogne Billancourt (FR)
(72) Inventeur: RIPOLL, Christophe, 78220, VIROFLAY (FR); DELMAS, Nicolas, 92380, GARCHES (FR)

(56) Documents cités:
- DE-A- 19 711 903
- DE-A- 19 854 306
- FR-A- 2 760 489
- FR-A- 2 831 727
- PATENT ABSTRACTS OF JAPAN vol. 2000, no. 26, 1 juillet 2002 (2002-07-01) & JP 2001 251874 A (NIKON CORP), 14 septembre 2001 (2001-09-14) -& JP 2001 251874 A (NIKON CORP) 14 septembre 2001 (2001-09-14)

## Description

La présente invention concerne un dispositif de commande électronique de plusieurs actionneurs piézo-électriques ultrasonores, et plus particulièrement d'injecteurs de carburant à étage piézo-électrique, pilotés par le calculateur d'injection électronique d'un moteur à combustion interne dans un véhicule automobile.

Plus précisément, le problème que vise à résoudre l'invention est le pilotage d'un dispositif de commande électronique provoquant l'excitation des cellules piézo-électriques pour faire vibrer la structure d'un injecteur, un tel dispositif étant décrit dans la demande de brevet français, déposée sous le numéro 01 14023 au nom de la Demanderesse. Un injecteur de carburant à étage piézo-électrique ultrasonore est destiné à pulvériser très finement le carburant, avec des gouttelettes calibrées pour assurer un dosage précis et suffisamment petites pour assurer la vaporisation complète et homogène du carburant injecté. Un tel injecteur comporte entre autres une buse cylindrique alimentée en carburant et à l'extrémité de laquelle est ménagé un orifice d'injection, et des moyens de mise en vibration cyclique de la buse, tel qu'un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente, au premier ordre, à une capacité dont la tension de chargement est élevée, supérieure à une centaine de volts. Ce transducteur est piloté en durée et en intensité par un dispositif de commande électronique, lui-même piloté par le système électronique de contrôle moteur pour réaliser une ouverture oscillante à fréquence ultrasonore du nez de la buse.

Le dispositif de commande électronique est destiné à générer un signal alternatif haute tension, supérieure à une centaine de volts, de fréquence élevée, supérieure à une dizaine de kiloHertz, pour exciter les cellules piézo-électriques à partir d'une source de tension continue. Dans un véhicule automobile, la batterie fournit une tension d'alimentation de valeur 12 ou 42 volts, ce qui implique d'augmenter cette tension par un convertisseur-élévateur de tension en courant continu DC-DC alimenté par la basse tension de la batterie.

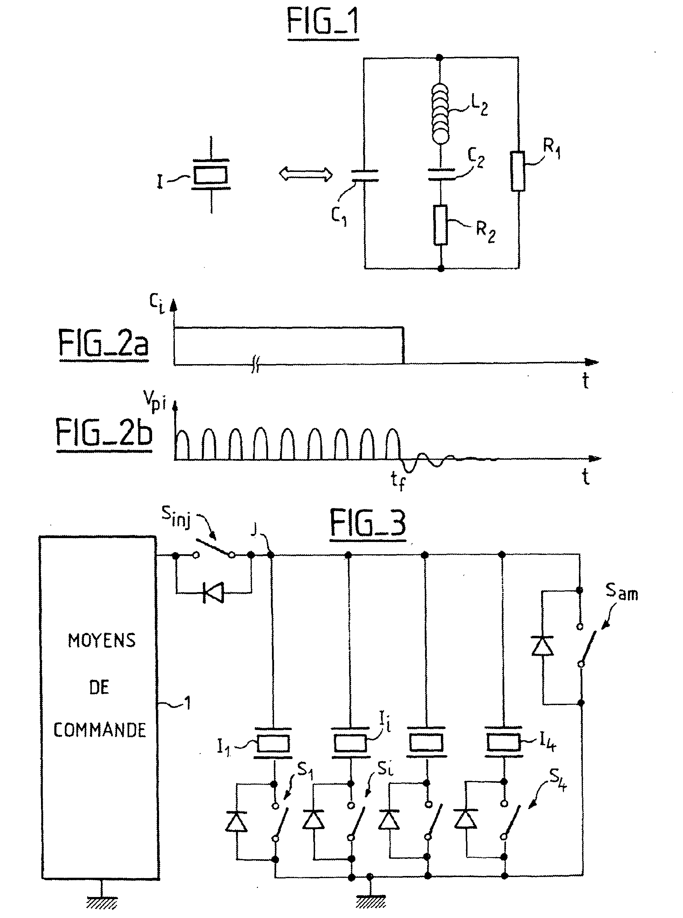

Si on considère qu'un actionneur ultrasonore I a pour schéma électrique équivalent un circuit comprenant trois branches en parallèle, une première correspondant à une capacité C₁, une deuxième correspondant à une résistance R, et une troisième correspondant à une branche motionnelle comprenant une inductance L₂, une capacité C₂ et une résistance R₂ en série (figure 1), on comprend qu'un tel actionneur emmagasine de l'énergie alors qu'il n'est plus commandé électroniquement. Cette énergie emmagasinée suffit à le faire osciller librement alors qu'il n'est plus contraint à un régime forcé, quelle que soit la topologie des moyens de pilotage électronique des différents actionneurs mis en parallèle.

Ainsi, on constate qu'en fin de pilotage de l'injection, cette énergie contenue dans la branche motionnelle et qui est susceptible d'osciller avec les capacités constituant l'injecteur, provoque effectivement des oscillations en fin d'ouverture des interrupteurs de sélection des injecteurs ultrasonores. La figure 2ₐ représente ce signal Cᵢ de commande d'un injecteur Iᵢ sélectionné et la figure 2_{b} représente la tension Vₚᵢ à ses bornes. Cette tension est périodique et à l'instant tᵢ de fin de commande, l'injecteur oscille librement, provoquant une traînée d'injection alors que l'injecteur devrait normalement être totalement inactif.

Il a été proposé dans les documents FR 2 760 489 et DE 197 11 903 un dispositif de commande de soupapes d'injection de carburant d'un moteur à combustion interne, par des organes de réglage piézoélectriques, au moyen d'un circuit de commande, dans lequel une coupure de l'injection en carburant est effectuée par des moyens de décharger les organes de réglage.

Le but de la présente invention est d'amortir les oscillations libres d'un injecteur piézo-électrique ultrasonore en fin de phase d'injection, en dotant le dispositif de commande des injecteurs, pilotés électroniquement successivement, de moyens d'amortissement par mise en court-circuit de chaque injecteur sélectionné après l'arrêt de sa commande de pilotage.

Pour cela, l'objet de l'invention est un dispositif de commande de plusieurs actionneurs piézo-électriques ultrasonores, pilotés électroniquement à partir d'un calculateur de contrôle et d'une source de tension continue, comportant des moyens électroniques de pilotage des actionneurs alimentés par la source de tension continue et délivrant un signal alternatif d'excitation de chaque actionneur sélectionné par un interrupteur commandable, monté en série avec ledit actionneur, caractérisé en ce qu'il comporte de plus des moyens d'amortissement des oscillations libres dudit actionner provoquant une traînée d'injection par mise en court-circuit de chaque actionneur piézo-électrique sélectionné après l'arrêt du signal d'excitation.

Selon une autre caractéristique des moyens de mise en court-circuit, ils sont constitués d'une part par un premier interrupteur monté en parallèle avec les branches constituées chacune par un actionneur piézo-électrique en série avec un interrupteur commandable de sélection, elles-mêmes en parallèle les unes des autres, et d'autre part par un second interrupteur reliant les moyens de pilotage des actionneurs au point de jonction des actionneurs.

Selon une autre caractéristique des moyens de mise en court-circuit, ceux-ci sont constitués par un interrupteur monté en parallèle avec chacun des actionneurs piézo-électrique, connecté entre leur point de jonction et l'interrupteur de sélection dudit actionneur.

Selon une autre caractéristique des moyens de mise en court-circuit, ils sont constitués par un circuit d'amortissement passif de type RC monté en parallèle sur l'ensemble des branches comprenant un actionneur piézo-électrique en série avec un interrupteur de sélection, elles-mêmes en parallèle les unes des autres, ou bien monté en parallèle sur chacun des actionneurs desdites branches en parallèle.

Selon une autre caractéristique du dispositif selon l'invention, dans le cas où les moyens de pilotage sont constitués par un montage en pont avec transformateur dont la charge du milieu est le primaire dudit transformateur, réalisé à partir de deux bras montés en parallèle aux bornes de la source de tension continue et constitués chacun de deux interrupteurs de pont en série commandables alternativement, dont les points milieux respectifs sont reliés aux deux bornes du primaire du transformateur, les moyens de mise en court-circuit sont réalisés par les couples des premiers, respectivement des seconds, interrupteurs de chaque bras, commandés pour relier ainsi les deux bornes de l'enroulement primaire à la borne positive, respectivement négative, de la source de tension continue, afin de court-circuiter l'enroulement secondaire du transformateur,

D'autres caractéristiques et avantages de l'invention apparaîtront à la lecture de la description de différents exemples de réalisation, illustrée par les figures suivantes qui sont, outre les figures 1 et 2 déjà décrites :
- les figures 3 et 4 : deux exemples de réalisation avec des interrupteurs commandables aux bornes des actionneurs piézo-électrique ;
- les figures 5 et 6 : deux exemples de réalisation avec des circuits d'amortissement passif de type RC ;
- la figure 7 : un exemple de réalisation avec commande des interrupteurs de pilotage des actionneurs piézo-électriques ;
- la figure 8 : un exemple de réalisation avec des diodes en anti-parallèle sur les actionneurs piézo-électriques.

Les éléments portant les mêmes références sur les différentes figures, représentant des exemples non limitatifs de modes de réalisation, remplissent les mêmes fonctions en vue des mêmes résultats.

Pour amortir les oscillations libres des actionneurs, en particulier du type injecteurs de carburant, à l'arrêt de la commande d'excitation, l'invention consiste à créer un court-circuit à leurs bornes, pendant une durée déterminée.

Selon un premier exemple de réalisation (figure 3), les moyens de mise en court-circuit sont constitués par un interrupteur commandable Sₐₘ, monté en parallèle sur les branches, constituées chacune par un injecteur Iᵢ piézo-électrique et son interrupteur de sélection Sᵢ commandable électroniquement montés en série, destiné à court-circuiter l'injecteur sélectionné qui a été excité et dont la commande d'excitation vient de s'arrêter pour stopper l'injection de carburant. Ces moyens comprennent de plus un second interrupteur commandable Sᵢₙⱼ reliant les moyens électroniques 1 de commande ou de pilotage de l'excitation des actionneurs piézo-électriques au point de jonction J de tous les actionneurs en parallèle. Cet interrupteur Sᵢₙⱼ est destiné à empêcher que les moyens de commande 1 ne soient aussi court-circuités.

Le procédé de fonctionnement d'un tel dispositif de commande d'actionneurs piézo-électriques est le suivant :
- sélection d'un injecteur Iᵢ par fermeture simultanée de l'interrupteur Sᵢₙⱼ et de l'interrupteur de sélection Sᵢ;
- génération du signal d'excitation de l'injecteur Iᵢ par les moyens de commande 1 ;
- à l'arrêt du signal d'excitation, ouverture de l'interrupteur Sᵢₙⱼ et fermeture simultanée de l'interrupteur d'amortissement Sₐₘ, l'interrupteur de sélection Sᵢ restant fermé ;
- ouverture simultanée des interrupteurs de sélection Sₐₘ et de sélection Sᵢ après évacuation de l'énergie contenue dans l'injecteur.

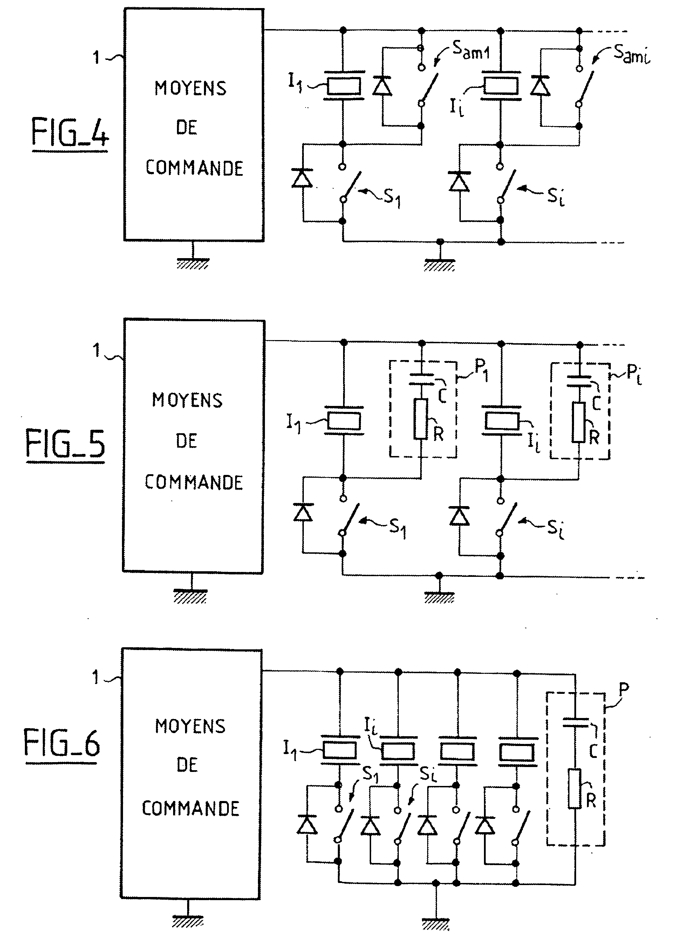

La figure 4 représente une variante de ce mode de réalisation, dans laquelle un interrupteur Sₐₘᵢ d'amortissement est monté en parallèle sur chaque injecteur piézo-électrique Iᵢ. Il est commandé à la fermeture afin de réaliser un court-circuit en fin de pilotage de l'injecteur sélectionné par l'intermédiaire de son interrupteur de sélection Sᵢ. Lorsque les oscillations libres de l'injecteur Sᵢ sélectionné sont totalement amorties, les interrupteurs de sélection Sᵢ et d'amortissement Sₐₘᵢ sont ouverts. Dans ce mode de réalisation, il n'est pas nécessaire de prévoir un interrupteur entre les moyens 1 de pilotage de l'excitation des actionneurs piézo-èlectriques et ceux-ci, car les interrupteurs d'amortissement ne provoquent pas de court-circuit de ces moyens de pilotage.

Les figures 5 et 6 représentent deux variantes d'un troisième mode de réalisation du dispositif selon l'invention, dans lequel les moyens d'amortissement sont réalisés par un circuit passif de type RC. Dans le cas de la figure 5, un tel circuit RC, Pᵢ est monté en parallèle sur chaque injecteur piézo-électrique Iᵢ. L'énergie emmagasinée dans chaque injecteur sélectionné, lors du pilotage de l'injection par les moyens 1, est dissipée dans le circuit RC à l'arrêt de ce pilotage.

Dans le cas de la figure 6, un seul circuit passif RC est monté en parallèle de l'ensemble des N branches, comprenant chacune un injecteur Iᵢ et son interrupteur de sélection Sᵢ. Pour chaque injecteur sélectionné, après l'arrêt du pilotage de son excitation, l'énergie qu'il a emmagasinée est dissipée dans le circuit passif RC, référencé P, qui amortit ainsi ses oscillations libres.

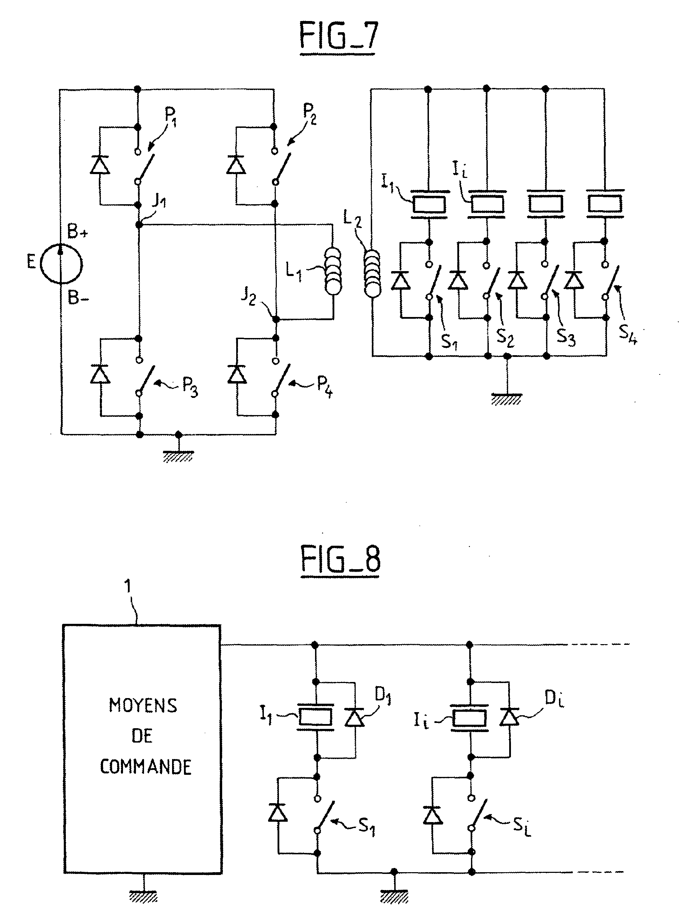

L'invention propose un autre mode de réalisation du dispositif de commande lorsque celui-ci comprend des moyens de commande de l'injection réalisés par un montage en pont et un transformateur (figure 7). Le pont est constitué par deux bras montés en parallèle aux bornes d'une source de tension continue, et constitués chacun par deux interrupteurs de pont P₁ et P₃, respectivement P₂ et P₄, en série et commandables alternativement, dont les points milieux respectifs J₁ et J₂ sont reliés aux deux bornes de l'enroulement primaire L₁ du transformateur. L'enroulement secondaire L₂ est monté en parallèle avec les branches comprenant les injecteurs et leurs interrupteurs Sᵢ de sélection. Dans ce mode de réalisation, les moyens d'amortissement des oscillations libres des injecteurs en fin d'excitation sont réalisés par la fermeture simultanée des premiers interrupteurs de pont P₁ et P₂ de chaque bras, afin de relier les deux bornes de l'enroulement primaire L₁ à une des bornes B+ par exemple, de la source de tension continue E, ce qui met en court-circuit l'enroulement secondaire L₂ et permet d'amortir les oscillations libres des injecteurs successivement sélectionnés car l'énergie va se dissiper dans les résistances de conduction des interrupteurs. Cet amortissement pourrait être également obtenu par la fermeture des deux seconds interrupteurs de pont P₃ et P₄ de chaque bras qui relieraient l'enroulement primaire L₁ à l'autre borne B- de la source de tension E. Ces deux interrupteurs de pont sont à nouveau ouverts simultanément avant un nouveau cycle d'excitation d'un autre injecteur.

Un dernier mode de réalisation de l'invention est représenté sur la figure 8 et consiste à placer en anti-parallèle sur chaque actionneur piézo-électrique Iᵢ une diode Dᵢ, qui autorise l'amortissement dans un seul sens du courant. Elles permettent de diminuer l'amplitude de l'oscillation en tension, et donc la quantité éjectée par l'injecteur piézo-électrique.

## Revendications

1. Dispositif de commande de plusieurs actionneurs (Iᵢ) piézo-électriques ultrasonores pilotés électroniquement à partir d'un calculateur de contrôle et d'une source de tension continue, comportant des moyens électroniques de pilotage (1) des actionneurs alimentés par la source de tension continue et délivrant un signal alternatif d'excitation de chaque actionneur (Iᵢ) sélectionné par un interrupteur commandable, (Sᵢ) monté en série avec ledit actionneur (Iᵢ), **caractérisé en ce qu'**il comporte de plus des moyens d'amortissement des oscillations libres dudit actionneur provoquant une traînée d'injection par mise en court-circuit de chaque actionneur (Iᵢ) piézo-électrique sélectionné après l'arrêt du signal d'excitation.

2. Dispositif de commande selon la revendication 1, **caractérisé en ce que** les moyens de mise en court-circuit sont constitués d'une part par un premier interrupteur (Sₐₘ) monté en parallèle avec les branches constituées chacune par un actionneur piézo-électrique (Iᵢ) en série avec un interrupteur de sélection (Sᵢ) commandable, elles-mêmes en parallèle les unes des autres, et d'autre part par un second interrupteur (Sᵢₙⱼ) reliant les moyens (1) de pilotage des actionneurs au point de jonction (J) des actionneurs.

3. Dispositif de commande selon la revendication 1, **caractérisé en ce que** les moyens de mise en court-circuit sont constitués par un interrupteur (Sₐₘᵢ) monté en parallèle avec chacun des actionneurs piézo-électriques (Iᵢ), connecté entre leur point de jonction (J) et l'interrupteur de sélection (Sᵢ) dudit actionneur.

4. Dispositif de commande selon la revendication 1, **caractérisé en ce que** les moyens de mise en court-circuit sont constitués par un circuit d'amortissement passif de type RO (P) monté en parallèle sur l'ensemble des branches comprenant un actionneur piézo-électrique (Iᵢ) en série avec un interrupteur de sélection (Sᵢ), elles-mêmes en parallèle les unes des autres.

5. Dispositif de commande selon la revendication 1, **caractérisé en ce que** les moyens de mise en court-circuit sont constitués par un circuit d'amortissement passif de type RC (Pi), monté en parallèle sur chacune des branches comprenant un actionneur piézo-électrique (Iᵢ) en série avec un interrupteur de sélection (Sᵢ), elles-mêmes en parallèle les unes des autres.

6. Dispositif de commande selon la revendication 1, **caractérisé en ce que**, dans le cas où les moyens de pilotage (1) sont constitués par un montage en pont avec un transformateur dont la charge du milieu est l'enroulement primaire (L₁) dudit transformateur, réalisé à partir de deux bras montés en parallèle aux bornes de la source de tension continue (E) et constitués chacun de deux interrupteurs de pont en série (P₁ et P₃, P₂ et P₄) commandables alternativement, dont les points milieux respectifs (J₁, J₂) sont reliés aux deux bornes de l'enroulement primaire du transformateur, les moyens de mise en court-circuit sont réalisés par les couples des premiers (P₁, P₂), respectivement des seconds (P₃, P₄), interrupteurs de chaque bras commandés pour relier ainsi les deux bornes du primaire à la borne positive, respectivement négative, de la source de tension continue, afin de court-circuiter l'enroulement secondaire (L₂) du transformateur.

7. Dispositif de commande selon la revendication 1, **caractérisé en ce que** les moyens de mise en court-circuit sont constitués par une diode (Dᵢ), placée en anti-parallèle sur chaque actionneur piézo-électrique (Iᵢ), qui autorise l'amortissement dans un seul sens du courant en diminuant l'amplitude de l'oscillation en tension de l'injecteur piézo-électrique.

## Claims

1. Device for operating several ultrasonic piezoelectric actuators (Iᵢ) electronically controlled from a control computer and a DC voltage source, comprising electronic means (1) of controlling the actuators which are powered by the DC voltage source and deliver an AC excitation signal to each actuator (Iᵢ) selected by a controllable switch (Sᵢ) mounted in series with the said actuator (Iᵢ); **characterized in that** it additionally comprises damping means for damping the free oscillations of the said actuator that cause injection drag, by short-circuiting each selected piezoelectric actuator (Iᵢ) after the excitation signal has stopped.

2. Operating device according to Claim 1, **characterized in that** the short-circuiting means consist on the one hand of a first switch (Sₐₘ) mounted in parallel with the branches, each of which consists of a piezoelectric actuator (Iᵢ) in series with a controllable selection switch (Sᵢ), which branches are themselves in parallel with one another and, on the other hand, of a second switch (Sᵢₙⱼ) connecting the control means (1) that control the actuators to the junction point (J) of the actuators.

3. Operating device according to Claim 1, **characterized in that** the short-circuiting means consist of a switch (Sₐₘᵢ) mounted in parallel with each of the piezoelectric actuators (Iᵢ) and connected between their junction point (J) and the selection switch (Sᵢ) of the said actuator.

4. Operating device according to Claim 1, **characterized in that** the short-circuiting means consist of a passive damping circuit of the RC type (P) mounted in parallel with all the branches and comprising a piezoelectric actuator (Iᵢ) in series with a selection switch (Sᵢ), the branches themselves being in parallel with one another.

5. Operating device according to Claim 1, **characterized in that** the short-circuiting means consist of a passive damping circuit of the RC type (Pᵢ) mounted in parallel with each of the branches and comprising a piezoelectric actuator (Iᵢ) in series with a selection switch (Sᵢ), the branches themselves being in parallel with one another.

6. Operating device according to Claim 1, **characterized in that**, when the control means (1) consist of a bridge setup with a transformer, the centre load of which is the primary winding (L₁) of the said transformer, created from two arms mounted in parallel at the terminals of the DC voltage source (E) and each consisting of two bridge switches in series (P₁ and P₃, P₂ and P₄) that can be operated alternately, the respective mid-points (J₁, J₂) of which are connected to the two terminals of the primary winding of the transformer, the short-circuiting means are created by the pairs of first (P₁, P₂) or respectively second (P₃, P₄) switches of each arm which are operated in such a way as thus to connect the two terminals of the primary to the positive terminal (or, respectively, to the negative terminal) of the DC voltage source in order to short-circuit the secondary winding (L₂) of the transformer.

7. Operating device according to Claim 1, **characterized in that** the short-circuiting means consist of a diode (Dᵢ) placed in anti-parallel on each piezoelectric actuator (Iᵢ), which provides damping in just one direction of the current by reducing the amplitude of the voltage oscillation of the piezoelectric injector.

## Patentansprüche

1. Steuervorrichtung mehrerer ausgehend von einem Kontrollrechner und von einer Gleichspannungsquelle elektronisch gesteuerter piezoelektrischer Ultraschallaktoren (Iᵢ), die elektronische Steuereinrichtungen (1) der Aktoren aufweist, die von der Gleichspannungsquelle gespeist werden und ein Wechselspannungssignal zur Anregung jedes Aktors (Iᵢ) liefern, der von einem mit dem Aktor (Iᵢ) in Reihe geschalteten steuerbaren Schalter (Sᵢ) ausgewählt wird, **dadurch gekennzeichnet, dass** sie außerdem Einrichtungen zur Dämpfung der freien Schwingungen des Aktors, die einen Einspritzwiderstand hervorrufen, durch Kurzschließen jedes ausgewählten piezoelektrischen Aktors (Iᵢ) nach dem Abschalten des Anregungssignals aufweist.

2. Steuervorrichtung nach Anspruch 1, **dadurch gekennzeichnet, dass** die Kurzschlusseinrichtungen aus einerseits einem ersten Schalter (Sₐₘ), der mit den je aus einem piezoelektrischen Aktor (Iᵢ) in Reihe mit einem steuerbaren Auswahlschalter (Sᵢ) bestehenden Zweigen parallelgeschaltet ist, die selbst zueinander parallelgeschaltet sind, und andererseits einem zweiten Schalter (Sᵢₙⱼ) bestehen, der die Steuereinrichtungen (1) der Aktoren mit dem Verbindungspunkt (J) der Aktoren verbindet.

3. Steuervorrichtung nach Anspruch 1, **dadurch gekennzeichnet, dass** die Kurzschlusseinrichtungen aus einem mit jedem der piezoelektrischen Aktoren (Iᵢ) parallelgeschalteten Schalter (Sₐₘᵢ) bestehen, der zwischen ihrem Verbindungspunkt (J) und dem Auswahlschalter (Sᵢ) des Aktors angeschlossen ist.

4. Steuervorrichtung nach Anspruch 1, **dadurch gekennzeichnet, dass** die Kurzschlusseinrichtungen aus einer passiven Dämpfungsschaltung vom Typ RC (P) bestehen, die mit der Gesamtheit der einen piezoelektrischen Aktor (Iᵢ) in Reihe mit einem Auswahlschalter (Sᵢ) enthaltenden Zweige parallelgeschaltet ist, die selbst zueinander parallelgeschaltet sind.

5. Steuervorrichtung nach Anspruch 1, **dadurch gekennzeichnet, dass** die Kurzschlusseinrichtungen aus einer passiven Dämpfungsschaltung vom Typ RC (Pᵢ) bestehen, die mit jedem der einen piezoelektrischen Aktor (Iᵢ) in Reihe mit einem Auswahlschalter (Sᵢ) enthaltenden Zweige parallelgeschaltet ist, die selbst zueinander parallelgeschaltet sind.

6. Steuervorrichtung nach Anspruch 1, **dadurch gekennzeichnet, dass** in dem Fall, in dem die Steuereinrichtungen (1) aus einer Brückenschaltung mit einem Transformator bestehen, dessen Mittenlast die Primärwicklung (L₁) des Transformators ist, die ausgehend von zwei Armen hergestellt wird, die mit den Klemmen der Gleichspannungsquelle (E) parallelgeschaltet sind und je aus zwei in Reihe geschalteten Brückenschaltern (P₁ und P₃, P₂ und P₄) bestehen, die abwechselnd steuerbar sind, deren jeweilige Mittenpunkte (J₁, J₂) mit den zwei Klemmen der Primärwicklung des Transformators verbunden sind, die Kurzschlusseinrichtungen von den Paaren der ersten (P₁, P₂), bzw. der zweiten Schalter (P₃, P₄) jedes Arms gebildet werden, die gesteuert werden, um so die zwei Klemmen der Primärwicklung mit der positiven bzw. negativen Klemme der Gleichspannungsquelle zu verbinden, um die Sekundärwicklung (L₂) des Transformators kurzzuschließen.

7. Steuervorrichtung nach Anspruch 1, **dadurch gekennzeichnet, dass** die Kurzschlusseinrichtungen aus einer auf jedem piezoelektrischen Aktor (Iᵢ) antiparallel angeordneten Diode (Dᵢ) bestehen, die die Dämpfung nur in einer Stromrichtung erlaubt, indem die Amplitude der Spannungsschwingung des piezoelektrischen Einspritzventils verringert wird.
